# EUROPEAN PATENT APPLICATION

(11) **EP 1 403 332 A1**
(43) Date of publication of application: **31.03.2004**
(21) Application number: 03253685.6
(22) Date of filing: 11.06.2003
(51) Int. Cl.: C09D 7/12, C09D 201/00, C08L 101/00

(54) **Nonaqueous compositions comprising polymernanoparticles (PNP)**

(30) Priority: 30.09.2002 US 414600 P
(71) Applicant: ROHM AND HAAS COMPANY, Philadelphia, Pennsylvania 19106-2399 (US)
(72) Inventor: Lorah, Dennis Paul, Lansdale, Pennsylvania 19446 (US)
(74) Representative: Kent, Venetia Katherine

(57) **Abstract**

A nonaqueous composition including a nonaqueous medium, a polymer soluble in the nonaqueous medium, and a dispersion of polymeric nanoparticles having a mean diameter of from 1 to 50 nanometers, the particles including, as polymerized units, at least one multiethylenically unsaturated monomer and, in certain embodiments, at least one polar ethylenically unsaturated monomer is provided. A method for providing a coating including the nonaqueous composition and the coating so prepared are also provided.

## Description

This invention relates to a nonaqueous composition. More particularly, the invention relates to a nonaqueous composition including a nonaqueous medium, a polymer soluble in the medium, and a dispersion of polymeric nanoparticles(PNPs) having a mean diameter of from 1 to 50 nanometers, the nanoparticles including, as polymerized units, at least one multiethylenically unsaturated monomer. A method for providing a coating and a coating so formed are also provided.

The benefits of nonaqueous polymeric coatings include their application properties, such as flow and leveling, their appearance such as gloss, distinctness of image, and clarity) and resistance properties such as to mechanical stresses and chemical exposure. By "nonaqueous medium" herein is meant a composition containing less than 20 wt% water, based on the weight of the medium.

Polymers used in such coatings (especially thermoplastic polymers) are typically in a glassy state during service (i.e., have a glass transition temperature (Tg) higher than the service temperature) to provide properties such as hardness, block resistance, water resistance, and dirt resistance to the dried coating. However, the glassy state of the polymer often reduces the flexibility of the dried coating. Coating flexibility is important for both factory and field applications over non-rigid or moisture and temperature sensitive substrates such as metal, plastic, wood etc. Typically the coating formulator will include as part of the coating formulation a plasticizer(s) (e.g. dibutyl phthalate, benzoate esters, etc.) to impart film flexibility. However including plasticizers can often reduce the above mentioned benefits provided by a glassy polymer. In addition plasticizers can reduce appearance properties (by forming an oily film on the coating surface) or escape the coating entirely over time by diffusing to the coating surface, thereby causing loss of flexibility.

US Patent No. 5,491,192 discloses a nonaqueous dispersion having a volume averaged particle size of from 253 to 438 nanometers (nm) used for modifying an alkyd solution polymer-based coating to provide shorter dry times.

It is desired to provide nonaqueous compositions capable of providing coatings having improved flexibility. By "improved flexibility" herein is meant an improvement relative to the flexibility of the coating absent the PNPs. It has now been found that such improvement inheres in nonaqueous compositions and in coatings formed from the compositions which include crosslinked polymeric nanoparticles having a diameter of from 1 to 50 nm, the nanoparticles comprising as polymerized units at least one multiethylenically unsaturated monomer.

In a first aspect of the present invention there is provided a nonaqueous composition comprising a nonaqueous medium, a polymer soluble in said medium, and a dispersion of polymeric nanoparticles having a mean diameter of from 1 to 50 nanometers, said nanoparticles comprising, as polymerized units, at least one multiethylenically unsaturated monomer.

In a second aspect of the present invention there is provided a method for forming a coating comprising: forming said nonaqueous composition; applying said composition to a substrate; and drying, or allowing to dry, said composition.

In a third aspect of the present invention there is provided a coating prepared by the method of the second aspect of the invention.

As used herein, the term "dispersion" refers to a physical state of matter that includes at least two distinct phases wherein a first phase is distributed in a second phase, the second phase being continuous.

The term "(meth)acrylic" used herein includes both acrylic and methacrylic and the term "(meth)acrylate" includes both acrylate and methacrylate. Likewise, the term "(meth)acrylamide" refers to both acrylamide and methacrylamide. "Alkyl" includes straight chain, branched and cyclic alkyl groups.

The practice of the present invention includes the use of polymeric nanoparticles having a mean diameter of from 1 to 50 nm, the nanoparticles including, as polymerized units, at least one multiethylenically unsaturated monomer. The PNPs of the present invention are addition polymers, which contain as polymerized units at least one multiethylenically unsaturated monomer. Suitable multiethylenically unsaturated monomers useful in the present invention include di⁻, tri⁻, tetra⁻, and higher multifunctional ethylenically unsaturated monomers such as, for example, divinyl benzene, trivinylbenzene, divinyltoluene, divinylpyridine, divinylnaphthalene divinylxylene, ethyleneglycol diacrylate, trimethylolpropane triacrylate, diethyleneglycol divinyl ether, trivinylcyclohexane, allyl methacrylate, ethyleneglycol dimethacrylate, diethyleneglycol di(meth)acrylate, propyleneglycol di(meth)acrylate, trimethylolpropane tri(meth)acrylate, 2,2-dimethylpropane-1,3- diacrylate, 1,3-butylene glycol di(meth)acrylate, 1,4-butanediol diacrylate, 1,6-hexanediol di(meth)acrylate, tripropylene glycol diacrylate, triethylene glycol dimethacrylate, polyethylene glycol 200 diacrylate, tetraethylene glycol di(meth)acrylate, polyethylene glycol dimethacrylate, ethoxylated bisphenol A di(meth)acrylate, polyethylene glycol 600 dimethacrylate, poly(butanediol) diacrylate, pentaerythritol triacrylate, trimethylolpropane triethoxy triacrylate, glyceryl propoxy triacrylate, pentaerythritol tetra(meth)acrylate, dipentaerythritol monohydroxypentaacrylate, divinyl silane, trivinyl silane, dimethyl divinyl silane, divinyl methyl silane, methyl trivinyl silane, diphenyl divinyl silane, divinyl phenyl silane, trivinyl phenyl silane, divinyl methyl phenyl silane, tetravinyl silane, dimethyl vinyl disiloxane, poly(methyl vinyl siloxane), poly(vinyl hydro siloxane), poly(phenyl vinyl siloxane), and mixtures thereof.

Typically, the PNPs contain at least 1% by weight based on the weight of the PNPs, of at least one polymerized multiethylenically unsaturated monomer. Up to and including 100% polymerized multiethylenically unsaturated monomer, based on the weight of the PNPs, are effectively used in the particles of the present invention. It is preferred that the amount of polymerized multiethylenically unsaturated monomer is from 1% to 80%, more preferably from 1% to 60%, most preferably from 1% to 25% by weight, based on the weight of the PNPs. In some embodiments, the PNPs contain, as polymerized units, at least one polar ethylenically unsaturated monomer. The level of suitable polar monomers in the PNPs, as polymerized units, is from 0% to 99%, preferably from 0.1% to 50%, more preferably from 0.5% to 20%, and most preferably from 0.5% to 7% by weight, based on the weight of the PNPs. The polar ethylenically unsaturated monomer is referred to herein as "polar monomer". Polar monomers include ionic monomers, by which is meant herein that the monomer bears an ionic charge when dissolved in water at a pH between 1 and 14, and nonionic polar monomers by which is meant herein that the monomer has a dipole moment greater than 1.10 Debye units. Dipole moments of molecules are given for example in CRC Handbook of Chemistry and Physics, 83rd Edition, David Lide, editor, CRC Press, 2002, p 9.45 to 9.51.

In certain embodiments the polar monomer is multiethylenically unsaturated. Suitable ionic monomers include, for example, acid-containing monomers, base-containing monomers, quaternized nitrogen-containing monomers, and other precursor monomers that can be subsequently formed into ionic monomers. Suitable acid groups include carboxylic acid groups and strong acid groups such as phosphorus containing acids and sulfur containing acids. Suitable base groups include amines and amides.

In embodiments of the present invention in which the PNP includes acid-containing monomers as polymerized units, suitable acid-containing monomers include, for example, carboxylic acid monomers, such as (meth)acrylic acid, acryloxypropionic acid, and crotonic acid; dicarboxylic acid monomers such as itaconic acid, maleic acid, fumaric acid, and citraconic acid; and monomers with half esters of dicarboxylic acid groups such as monomers containing one carboxylic acid functionality and one C₁-₆ ester. Preferred is (meth)acrylic acid. Suitable strong acid monomers include sulfur acid monomers such as 2-acrylamido-2-methyl propane sulfonic acid, styrene sulfonic acid, vinyl sulfonic acid, sulfoethyl (meth)acrylate, sulfopropyl (meth)acrylate, 2-acrylamido-2-methyl propane sulfinic acid, styrene sulfinic acid, and vinyl sulfinic acid; and phosphorus acid monomers such as 2-phosphoethyl (meth)acrylate, vinyl phosphoric acid, vinyl phosphinic acid. Phosphorus acid monomers are desirable as they provide improved adhesion to certain substrates (e.g., metal).

In embodiments of the present invention in which the PNP includes base-containing monomers as polymerized units, suitable base-containing monomers include, for example, monomers having amine functionality, which includes N,N-dimethylaminoethyl (meth)acrylate, N,N-diethylaminoethyl (meth)acrylate, N-t-butylaminoethyl (meth)acrylate, N,N-dimethylaminopropyl (meth)acrylamide, p-aminostyrene, N,N-cyclohexylallylamine, allylamine, diallylamine, dimethylallylamine, N-ethyldimethylallylamine, crotyl amines, and N-ethylmethallylamine; monomers having pyridine functionality, which includes 2-vinylpyridine and 4-vinylpyridine; monomers having piperidine functionality, such as vinylpiperidines; and monomers having imidazole functionality, which includes vinyl imidazole. Other suitable base-containing monomers include oxazolidinylethyl (meth)acrylate, vinylbenzylamines, vinylphenylamines, substituted diallylamines, ureidoethyl methacrylate, 2-morpholinoethyl (meth)acrylate, acrylamide, methacrylamide, N-substituted (meth)acrylamides, methacrylamidopropyl trimethyl ammonium chloride, diallyl dimethyl ammonium chloride, 2-trimethyl ammonium ethyl methacrylic chloride, and the like.

Nonionic polar monomers include monomers bearing groups such as, for example, hydroxyl such as 2-hydroxyethyl (meth)acrylate, epoxy such as glycidyl (meth)acrylate, benzophenone, isocyanate such as 2-isocyanatoethyl methacrylate, acetophenone, acetoacetate such as acetoacetoxyethyl (meth)acrylate, and silane.

In certain embodiments of the present invention PNPs further contain, as polymerized units, one or more third monomers that are neither multiethylenically unsaturated monomers nor polar monomers. The level of suitable third monomers that are neither multiethylenically unsaturated or polar monomers in the PNPs, as polymerized units, is from 0% to 99%, based on the weight of the PNPs; preferably from 20% to 99%; more preferably from 40% to 90%; and most preferably from 75% to 90% by weight, based on PNP weight. Some suitable third monomers include, for example, C₁-C₂₄ alkyl (meth)acrylates such as methyl (meth)acrylate, ethyl (meth)acrylate, propyl (meth)acrylate, butyl (meth)acrylate, isobutyl (meth)acrylate, hexyl (meth)acrylate, cyclohexyl (meth)acrylate, 2-ethylhexyl (meth)acrylate, octyl (meth)acrylate, decyl (meth)acrylate, dodecyl (meth)acrylate, pentadecyl (meth)acrylate, hexadecyl (meth)acrylate, octadecyl (meth)acrylate, and nonadecyl (meth)acrylate, and mixtures thereof. Also suitable are vinylaromatic monomers such as styrene, α-methylstyrene, vinyltoluene, *p*-methylstyrene, ethylvinylbenzene, vinylnaphthalene, and vinylxylenes. The vinylaromatic monomers also include their corresponding substituted counterparts, such as halogenated derivatives, i.e., containing one or more halogen groups, such as fluorine, chlorine or bromine; and nitro, cyano, (C₁-C₁₀)alkoxy, halo(C₁-C₁₀)alkyl, (C₁-C₁₀)alkoxy, carboxy, and the like. Also suitable for inclusion as polymerized units in some embodiments of the PNP of the present invention are substituted ethylene monomers including, for example, allylic monomers, vinyl acetate, vinyl formamide, vinyl chloride, vinyl fluoride, vinyl bromide, vinylidene chloride, vinylidene fluoride and vinylidene bromide

Certain embodiments of the PNPs of the present invention also contain functional groups, which have been provided by including, as polymerized units, monomers containing functional groups; functional groups introduced in this way are known herein as "primary" functional groups. Other functional groups can be bound to the PNPs by taking PNPs with primary functional groups and reacting those primary functional groups with suitable modifying compounds, as taught in US Patent No. 5,270,380. A suitable modifying compound is any compound that reacts usefully with the primary functional groups of the PNPs; however, modifying compounds are thought to be most useful when they are used to alter the functionality of the PNP. That is, most modifying compounds have at least one "linking" functional group and at least one polar group on the same molecule. Generally, the linking functional groups react with the primary functional groups of the PNPs to form bonds between the modifying compounds and the PNPs; in this way, some or all of the primary functional groups of the PNPs are converted to polar groups.

Various functional groups are suitable for use in the present invention. Any suitable functional group is usable as a primary functional group or as a linking functional group. Suitable functional groups include, for example, acetoacetate, aldehyde, amine or other base, anhydride, isocyanate, epoxy, hydrazide, carboxyl or other acid, carbodiimide, halide, chloro-methyl ester, chloromethyl amine, hydroxyl, aziridine, unsaturation, thiol, and mixtures thereof.

In the practice of the present invention, whenever one functional group is reacted with a different functional group to form a useful bond, such a pair of functional groups is said herein to be "complementary." For example a hydroxyl functional group on first moiety is made to react with a carboxyl functional group on a second moiety to form a bond (in this example, an ester linkage) between the moieties. Pairs of functional groups that are complementary include, for example: (a) acetoacetate-aldehyde; (b) acetoacetate-amine; (c) amine-aldehyde; (d) amine-anhydride; (e) amine-isocyanate; (f) amine-epoxy; (g) aldehyde-hydrazide; (h) acid-epoxy; (i) acid-carbodiimide; (j) acid-chloro methyl ester; (k) acid-chloro methyl amine; (l) acid-alcohol; (m) acid-anhydride; (n) acid-aziridine; (o) epoxy-thiol; and (p) isocyanate-alcohol.

In embodiments of the present invention that use modifying compounds, the reaction between the primary functional groups of the PNPs and the linking functional groups of the modifying compounds provides either ionic or covalent bonding. Appropriate ionic bonding includes acid-base interaction and ion pair bonding of negatively and positively charged atoms. Covalent bonding is provided by conducting a chemical reaction between complementary functional groups on the PNPs *(i.e.,* the "primary" functional groups) and on the modifying compounds *(i.e.,* the "linking" functional group). In any pair of complementary reactive groups, the first or second reactable group in each pair is present in the PNPs or in the modifying compound.

In the practice of the present invention, an example of epoxy functionality as a primary functional group on PNPs is PNPs that include glycidyl (meth)acrylate and/or ally glycidyl ether as polymerized units in the PNPs. Other monomers suitable for providing primary functionality include, for example, anhydride, such as maleic anhydride, and halide-containing functional monomers. Suitable halide-containing functional monomers include, for example, vinylaromatic halides and halo-alkyl(meth)acrylates. Suitable vinylaromatic halides include vinylbenzyl chloride, vinylbenzyl bromide, allyl chloride, and allyl bromide. Suitable halo-alkyl(meth)acrylates include chloromethyl (meth)acrylate.

A suitable polymerization process to prepare the nonaqueous PNP dispersion is free radical solution polymerization of at least one multiethylenically unsaturated monomer and, in certain embodiments, at least one polar monomer. By "solution polymerization" herein is meant free radical addition polymerization in a suitable solvent for the polymer. By "suitable solvent for the polymer" herein is meant that linear random (co)-polymers having substantially similar polymerized monomer units to the PNPs, are soluble in the solvent. Typically the solvent used in the solution polymerization is all or part of the nonaqueous medium of the nonaqueous composition. One method of selecting a suitable solvent or mixture of solvents is by using solubility parameter analysis. According to such analysis, the suitability of the solvent is determined by substantially matching the solubility parameters of the PNP and of the solvent, such as the Van Krevelen parameters of delta d, delta p, delta h and delta v. See, for example, Van Krevelen et al., Properties of Polymers. Their Estimation and Correlation with Chemical Structure, Elsevier Scientific Publishing Co., 1976; Olabisi et al., Polymer-Polymer Miscibility, Academic Press, NY, 1979; Coleman et al., Specific Interactions and the Miscibility of Polymer Blends, Technomic, 1991; and A. F. M. Barton, CRC Handbook of Solubility Parameters and Other Cohesion Parameters, 2^{nd} Ed., CRC Press, 1991. Delta d is a measure of dispersive interactions, delta p is a measure of polar interactions, delta h is a measure of hydrogen bonding interactions, and delta v is a measure of both dispersive and polar interactions. Such solubility parameters are either calculated, such as by the group contribution method, or determined experimentally as is known in the art. A preferred solvent has a delta v parameter within 1 unit (square root of J/cc) of the polymer value. Suitable solvents for the polymerization include organic solvents such as hydrocarbons; alkanes; halohydrocarbons; chlorinated, fluorinated, and brominated hydrocarbons; aromatic hydrocarbons; ethers; ketones; esters; alcohols; supercritical carbon dioxide; and mixtures thereof. Particularly suitable solvents, depending on the composition of the PNP, include dodecane, mesitylene, xylenes, acetone, diphenyl ether, gamma-butyrolactone, ethyl acetate, ethyl lactate, propyleneglycol monomethyl ether acetate, caprolactone, 2-heptanone, methylisobutyl ketone, diisobutylketone, propyleneglycol monomethyl ether, and alkyl-alcohols, such as isopropanol, decanol, and t-butanol.

One method of preparing the nonaqueous PNP dispersion is by first charging a solvent or, alternatively, a mixture of solvent and some portion of the monomers to a reaction vessel. The monomer charge is typically composed of monomers, initiator, and, in certain cases, chain transfer agent. Typically, initiation temperatures are in the range of from 55 °C to 125 °C, although lower or higher initiator temperatures are possible using suitable low temperature or high temperature initiators known in the art. After the heel charge has reached a temperature sufficient to initiate polymerization, the monomer charge or balance of the monomer charge is added to the reaction vessel. The monomer charge time period is typically in the range of from 15 minutes to 4 hours. During the monomer charge, the reaction temperature is typically kept constant, although it is also possible to vary the reaction temperature. After completing the monomer mixture addition, additional initiator in solvent is preferably charged to the reaction and/or the reaction mixture can be held for a time.

Control of PNP particle size and distribution can be achieved by one or more of such methods as choice of solvent, choice of initiator, total solids level, initiator level, type and amount of multi-functional monomer, type and amount of ionic monomer, type and amount of chain transfer agent, and reaction conditions.

Initiators useful in the free radical polymerization of the present invention include, for example, one or more of: peroxyesters, alkylhydroperoxides, dialkylperoxides, azoinitiators, persulfates, redox initiators and the like. The amount of the free radical initiator used is typically from 0.05% to 10% by weight, based on the weight of total monomer. Chain transfer reagents are optionally used to control the extent of the polymerization of the PNPs useful in the present invention. Suitable chain transfer agents include, for example: alkyl mercaptans such as dodecyl mercaptan, aromatic hydrocarbons with activated hydrogens such as toluene, and alkyl halides such as bromotrichloroethane.

In certain embodiments PNPs are formed in a nonaqueous medium in the presence of a polymer soluble in the medium.

The PNPs have a mean diameter in the range of from 1 nm to 50 nm, preferably in the range of from 1 nm to 40 nm, more preferably from 1 nm to 30 nm, even more preferably from 1 nm to 25 nm, even further preferably from 1 nm to 20 nm, and most preferably from 1 nm to 10 nm. It is further typical that the PNPs have a mean particle diameter of at least 1.5 nm, preferably at least 2 nm. The particle sizes (mean particle diameter) of the PNPs are determined using standard dynamic light scattering techniques, wherein the correlation functions is converted to hydrodynamic sizes using LaPlace inversion methods, such as CONTIN.

In some embodiments, the PNPs have a glass transition temperature from -90 °C to 170 °C, as determined by a modulated Differential Scanning Calorimetry (DSC) measurement. In PNPs containing greater than 50 % by weight, based on PNP weight, the Tg of the PNP is taken herein as 100 °C.

The PNPs of the present invention typically have an "apparent weight average molecular weight" in the range of 5,000 to 1,000,000, preferably in the range of 10,000 to 500,000 and more preferably in the range of 15,000 to 100,000. As used herein, "apparent weight average molecular weight" is a measure of the size of the PNP particles using standard gel permeation chromatography (GPC) methods, e.g., using THF solvent at 40 °C, 3 Plgel Columns (Polymer Labs), 100 Angstrom (10 nm), 10³ Angstroms (100 nm), 10⁴ Angstroms (1 micron), 30 cm long, 7.8 mm ID, 1 ml/min, 100 microliter injection volume, calibrated to narrow polystyrene standards using Polymer Labs CALIBRE ™ software. The GPC elution times of the PNPs provide an indication of an apparent weight average molecular weight measurement, and are not necessarily an absolute weight average molecular weight measurement.

The PNPs are desirably discrete or unagglomerated in the nonaqueous composition. The PNPs are utilizable in the form of a dispersion in the polymerization solvent or a different solvent, or mixture thereof; alternatively, they are isolated by, for example, vacuum evaporation, by precipitation into a non-solvent, and spray drying. When isolated, PNPs can be subsequently redispersed in a medium appropriate for incorporation into a nonaqueous medium.

The nonaqueous composition includes a polymer soluble in the nonaqueous medium. Such soluble polymers include free radical addition polymers such as poly(meth)acrylates, polystyrene, and styrene/acrylics; condensation polymers such as urethanes, epoxies, alkyds, and silicones; photo-polymerized polymers; and mixtures thereof. Typically the polymer soluble in the nonaqueous medium has a weight average molecular weight of from 3,000 to 300,000, preferably from 30,000 to 200,000. Typically the polymer soluble in the nonaqueous medium has a Tg from -50 °C to 150 °C, preferably from -20 °C to 110 °C. In some embodiments the Tg of the polymer soluble in the nonaqueous medium is lower than the Tg of the polymeric nanoparticles. In other embodiments the Tg of the polymer soluble in the nonaqueous medium is equal to or higher than the Tg of the polymeric nanoparticles

The PNPs are incorporated into a nonaqueous medium by alternatively admixing the PNPs or a dispersion of the PNPs with other dissolved or dispersed polymers and/or other coatings adjuvants as are well known to those skilled in the art such as, for example, pigments, extenders, crosslinkers, mar aids, block aids, defoamers, and the like. In embodiments where crosslinking beyond the level already included in the PNPs is desired, such crosslinking is effected based on functionality, for example, included in the PNPs, in the soluble polymer, in optional ingredients included in the composition, or any combination thereof. It is envisioned that crosslinking may be effected through the agency of functionality which provides reactivity under conditions other than those experienced in forming the nonaqueous composition such as by providing a catalyst, providing a higher temperature, removing a blocking group, providing energetic radiation, etc. Such crosslinking is effected through chemistry known in the art as provided, for example, by melamine resins, urea resins, epoxy resins, polyisocyanates, polycarbodiimides, methylolacrylamide groups, and UV or e-beam radiation. PNPs are typically present in the nonaqueous composition at levels of from 0.01% to 99.9%, preferably from 0.5% to 50%, more preferably from 1% to 20% by weight, based on total polymer weight.

In the method for providing a coating of the invention, a nonaqueous coating composition is prepared by techniques which are well known in the coatings art. First, if the coating composition is to be pigmented, at least one pigment is well dispersed in a nonaqueous medium under high shear such as is afforded by a COWLES™ mixer. Then the PNP dispersion and soluble polymer are added under lower shear stirring along with other coating adjuvants as desired. Alternatively, the soluble polymer may be included in the pigment dispersion step. The nonaqueous coating composition typically contains one or more conventional coating adjuvants such as, for example, tackifiers, pigments, crosslinkers, thickeners or rheology modifiers, humectants, wetting agents, biocides, plasticizers, antifoaming agents, colorants, waxes, and anti-oxidants.

The solids content of the nonaqueous coating composition may be from 10% to 85 % by volume. The viscosity of the aqueous composition is typically from 0.05 to 2000 Pa.s (50 cps to 2,000,000 cps), as measured using a Brookfield viscometer; the viscosities appropriate for different end uses and application methods vary considerably.

The nonaqueous coating composition is applied by conventional application methods such as, for example, brush or paint roller, air-atomized spray, air-assisted spray, airless spray, high volume low pressure spray, air-assisted airless spray, and electrostatic spray.

The nonaqueous coating composition is typically applied to a substrate such as, for example, plastic including sheets and films, wood, metal, previously painted surfaces, weathered or aged substrates, cementitious substrates, and asphaltic substrates, with or without a prior substrate treatment such as a primer. In some embodiments the nonaqueous coating composition affords a higher solids content at a given viscosity relative to a corresponding composition absent the polymeric nanoparticles. In some embodiments the coating composition prepared by the method of this invention provides at least one of increased flexibility, higher impact resistance, greater mar resistance, greater slip, and higher hardness relative to a corresponding composition absent the polymeric nanoparticles.

The nonaqueous composition coated on the substrate is typically dried, or allowed to dry, at a temperature from 20°C to 95°C.

An example to illustrate the invention follows.

### EXAMPLE 1. Preparation and evaluation of nonaqueous coating composition

PNPs having the composition 90 weight% methyl methacrylate/10 weight% trimethylolpropane trimethacrylate (Tg=100 C) were prepared in the presence of an all-acrylic copolymer (Tg = 50°C, Mw = 70,000) dissolved in toluene (40% weight solids). Nonaqueous coating compositions was prepared with the solution polymer alone and with the PNPs/soluble polymer reaction mixture as prepared above (23% PNPs by weight, based on total polymer weight). Film were cast on an aluminum panel using a 7 mil Bird draw-down bar and dried at room temperature. Data are presented in Table 1.1

**Table 1.1**

| Coatings properties | | | | |
|---|---|---|---|---|
| PNP Level (weight%) | Film Clarity | Mandrel Bend (1/2" mandrel) | Mandrel Bend (1/8" mandrel) | Hardness (Pencil) |
| 0 | Excellent | Fail | Fail | HB |
| 23 | Excellent | Pass | Pass | F |
| Note: F is one unit harder than HB on the Pencil Hardness scale. | | | | |

The coating of the invention containing PNPs exhibited improved flexibility and was simultaneously harder than the non-PNP containing control. These results were unexpected as blending with hard (such as Poly-MMA) non-PNP (conventional) solution polymers was expected to reduce film flexibility.

## Claims

1. A nonaqueous composition comprising a nonaqueous medium, a polymer soluble in said medium, and a dispersion of polymeric nanoparticles having a mean diameter of from 1 to 50 nanometers, said nanoparticles comprising, as polymerized units, at least one multiethylenically unsaturated monomer.

2. The nonaqueous composition of claim 1 wherein said nanoparticles further comprise, as polymerized units, at least one polar ethylenically unsaturated monomer.

3. The nonaqueous composition of claim 1 or claim 2 wherein said nanoparticles have been formed in the presence of at least some of said polymer soluble in said medium.

4. The nonaqueous composition of claim 1 or claim 2 or claim 3 wherein the glass transition temperature (Tg) of said soluble polymer is lower than the Tg of said polymeric nanoparticles.

5. The nonaqueous composition of claim 1 or claim 2 or claim 3 wherein the glass transition temperature (Tg) of said soluble polymer is equal to or higher than the Tg of said polymeric nanoparticles.

6. A method for providing a coating comprising:
forming the nonaqueous composition of claim 1 or claim 2 or claim 3;
applying said composition to a substrate; and
drying, or allowing to dry, said composition.

7. A coating prepared by the method of claim 6.
